# EUROPEAN PATENT SPECIFICATION

(11) **EP 2 991 530 B1**
(45) Date of publication and mention of the grant of the patent: **25.10.2017**
(21) Application number: 14730981.9
(22) Date of filing: 29.04.2014
(51) Int. Cl.: A47J 31/52, A47J 31/46, A47J 31/36

(54) **COFFEE PERCOLATOR, METHOD OF CONTROLLING WATER PRESSURE IN SAID PERCOLATOR AND USE THEREOF**
KAFFEEMASCHINE, VERFAHREN ZUM REGELN DES WASSERDRUCKS IN SOLCH EINER KAFFEEMASCHINE UND VERWENDUNG DAVON
PERCOLATEUR À CAFÉ, PROCÉDÉ DE COMMANDE DE PRESSION D'EAU DANS LEDIT PERCOLATEUR ET UTILISATION ASSOCIÉES

(30) Priority: 03.05.2013 IT MI20130728
(43) Date of publication of application: 09.03.2016
(73) Proprietor: Ode S.r.l., 23823 Colico (LC) (IT)
(72) Inventor: ROSSANO, Lorenzo, 23025 Novate Mezzola (SO) (IT)
(74) Representative: Riccardi, Sergio
(86) International application number: PCT/IB2014/000643
(87) International publication number: WO 2014/177925

(56) References cited:
- EP-A1- 2 314 183
- GB-A- 2 348 185

## Description

The present invention relates to a coffee percolator provided with a pressure controlling system to optimize quality of coffee delivered by the machine and at the same time reduce the costs of said percolator.

It is well known that coffee, in all its variations, is a traditionally very valued beverage, and several methods and kinds of coffee percolators were studied and developed in the course of time for its preparation and delivery. Indeed there is a great number of coffee percolators, whose operation evolved in time, not only to obtain the best possible quality of beverage, but also for example to optimize the machine energy consumption or to make very wear resistant machines, or not subject to bacterial contamination, or reducing the user's waiting time and so on. These and other characteristics were studied and improved in the course of time and mainly developed by manufacturing coffee percolators adapted to solve one or more of said problems and/or optimize one or more of said performances, being understood that in any case the main goal is always to achieve an optimal quality of the coffee beverage.

In order to obtain the best possible quality of beverage, starting from a definite coffee blend, one must regulate a number of parameters, such as water temperature and flow, quantity and pressure of steam, air, other liquids, the infusion time and so on.

More particularly, espresso coffee is a beverage, which is made very quickly by using a coffee percolator forcing passage of hot water through a layer of ground coffee, contained in a proper filter, generally made of a metal material. As above mentioned, one of the minimum requirements to be controlled to obtain a beverage of good quality, is pressure of water passing through the coffee layer in the filter at a definite temperature. The optimal water temperature is variable according to the coffee blend, type of desired beverage, quantity of coffee inside the filter and other parameters, the above mentioned ones being the most important.

In order to simplify the description of the complex structure of a coffee percolator, said machine comprises at least a hydraulic pump regulating the water inflow to the percolator, said pump being connected through a hydraulic circuit to a delivery assembly provided with a filter unit containing the coffee powder, adapted to deliver the coffee beverage. Between the hydraulic pump and the delivery assembly, there are some basic elements such as a volumetric meter, a water flow rate controlling valve and a boiler, all controlled by an electronic control unit.

More particularly, the kind of valve used to control the flow rate, influences conclusively many of the factors defining the final quality of the delivered beverage. Indeed the type of valve used influences water flow rate and pressure, thus the coffee delivery time; a kind of valve suitable for this purpose may for instance be an adjustable flow rate valve, already used in known systems nowadays considered to be rather innovative.

Use of an adjustable valve is actually a generic definition applicable to a great number of valves with great differences from one another, and a type of valves used in the prior art consists of the solenoid valves. Solenoid valves achieved advantages relative to the prior systems, namely a dynamic regulation of pressure and flow rate. As a matter of fact, going back in the history of coffee percolators, prior to introduction of an adjustable valve, regulation was made only through a calibrated nozzle allowing to fill the filter chamber in such a way that coffee powder wetting did not occur suddenly. Once the chamber is full, the maximum circuit pressure is attained during the extraction stage. However this kind of regulation did not allow to adjust pressure dynamically, a parameter whose modulation was found to be required during the beverage preparation stage, in order to obtain a coffee beverage with good organoleptic quality.

It is well known that coffee preparation is considered to be almost an art, and methods were and still are investigated, of obtaining the best possible coffee beverage, and among the various evolutions and improvements in the field of water percolators, it was recognized that the quality of the produced beverage is definitely improved, by changing from a static regulation such as by a nozzle, to a dynamic one achieved by an adjustable valve. Indeed it is by now known that, by keeping low pressure in the first stage of water delivery, when coffee powder is being wetted, and increasing pressure in the second stage of actual extraction, the produced espresso coffee has superior organoleptic characteristics, in comparison with a coffee beverage obtained by applying a constant pressure during the whole cycle of coffee delivery (using only a nozzle), and this is achieved just by using an adjustable valve.

However, use of solenoid valves, although it produced improvements in quality of the delivered coffee beverage, clearly involves use of control systems for said solenoid valve, to solve the problems connected with use of this kind of adjustable valves, and this obviously causes a greater burden of structure and operation of the machine, besides delays in regulation and operation times of the machine, and greater energy consumption, as it will be discussed hereinafter.

More particularly, a solenoid valve due to its intrinsic structure, warms up in use, since electric energy flowing through the valve, causes its heating, indeed it is well known that operation of solenoid valves is directly influenced by its temperature during use. Heating of the solenoid valve causes pressure of outflowing water to undergo undesired variations. In order to measure said pressure variations, and correctly adjust pressure, one must arrange downstream the valve (inside the circuit) a pressure transducer exactly measuring the occurred pressure variations. It is very important to point out that a pressure transducer has almost the same cost of a solenoid valve, therefore it is a component having a not negligible cost, having a remarkable influence on the total cost of the coffee percolator. Moreover, the adoption of a pressure transducer in the system causes delays along the system control loop; in this regard it is also to be noted that the control loop of a system provided with a solenoid valve is retroactive, namely checking the valve and consequently actuating the components as a feedback.

These factors influence the system response times, namely the time required to carry out the desired pressure variations, thus influencing the beverage delivery time, and at last the quality of the delivered beverage. It is indeed known to men skilled in this art, that delays even in the order of 100ms in the stage of reaching the required pressure of coffee delivery, influence the final quality of the product, in other terms make the difference between a good coffee and a poor one. In this regard, it is to be further noted that a typical coffee delivery time, i.e. the time of water passage through the filter, is about 25 seconds, both in case of delivering a classic espresso coffee or a different kind of coffee such as coffee with cream. Among these 25 seconds, only 5 seconds are needed to bring the valve (or its stem) to the desired position, thus producing the required pressure; the remaining 20 seconds is the time in which coffee feeding water traverses the valve (stably set at the desired pressure). Therefore it is necessary to feed the valve with electric energy for 5 seconds only, while no regulation is required in the following 20 seconds, but being a solenoid valve, it has to be fed for the entire period of 25 seconds to be kept open, otherwise the valve would be closed, thus breaking prematurely the coffee delivery.

Finally, it is also to be noted that a proportional solenoid valve is subject to many internal frictions and strong hysteresis due to the spring (shown in the annexed drawings); typical hysteresis values between opening and closing steps are of about 20%. Clearly even this factor is being added to the above cited delay times, consequently having a negative impact on the quality of the delivered coffee, as the present values of pressure and time are not correctly respected, just to the detriment of quality of the final product.

In this regard the document EP 2314183 is particularly illustrative, as it discloses a coffee percolator comprising a hydraulic circuit, a hydraulic pump connected as usually to a delivery unit, and a water flow rate control valve, which is a solenoid valve, this system comprising also feedback circuits. As hereinafter discussed, said solenoid valve and said feedback circuits are overcome by the coffee percolator of the present invention.

As a matter of fact, the known solenoid valves are affected by very high hysteresis values, and are very sensible to variations of the coil in operation, thus requiring a complex energy management, and the feedback system results to be particularly expensive.

The present invention departs from the traditional way of designing and assembling the circuits for coffee percolators, wherein to find a solution to the problems of use of a solenoid valve in circuits for coffee percolators, further components were added with the purpose of controlling the solenoid valve and correcting the errors caused by the valve, and controlling also delays, the whole with higher energy consumption due to this kind of valve in comparison with simpler systems.

The proposed invention is able to solve the above mentioned problems caused by a solenoid valve used inside a coffee percolator, disclosing use of a type of valve properly adapted for this purpose, which traditionally was never used in this field.

More particularly, the present invention describes a coffee percolator comprising a proportional valve driven by a stepping motor, to be used in place of an electronic valve with adjustable flow rate or solenoid valve.

A stepping motor driven valve is able to adjust the flow rate of water, steam, air and liquids of any kind, through its progressive opening. In a particularly advantageous way, the step-by-step regulation allows to perform a very fine adjustment of the flow rate, which is not possible with the normal solenoid valves, since these valves are very sensitive to undesired pressure variations due to a temperature rise. On the contrary a stepping motor driven valve, in the stage of pressure adjustment, does not feel the effect of temperature variations, therefore it is not subject to position variations and consequently to undesired pressure variations, as it will be apparent from the following detailed description and the annexed drawings.

It is clear that the stepping motor driven valve of the present invention is very advantageous, also in view of the fact that it does not require a pressure transducer controlling said pressure variations downstream the valve, as it does not feel pressure variations caused by temperature changes. Therefore this allows not to insert a pressure transducer in the circuit, with considerable savings in manufacturing and marketing stages of a coffee percolator provided with a valve of the herein described kind.

Consequently, it is further apparent that a circuit comprising a stepping motor driven valve is not a feedback circuit, with the relevant advantages of lower delay times in the system, which is more performing, has a greater control of the precision of coffee delivery times and pressures, that means the achievement of a beverage of superior quality.

Still more advantageously, a stepping motor driven valve inserted into a coffee delivery circuit allows a considerable energy saving. Indeed said valve, once adjusted through a suitable electronic control unit to supply the required pressure, does not require an electric feed any longer, because when the electricity feed to the valve is interrupted, said valve remains at the last adjusted position (step). Therefore it is possible to switch off the valve after 5 seconds, thus saving 20 seconds of electric power per each coffee delivery cycle. It is clear that this value of 20 seconds, multiplied by the countless cycles of the machine, achieves a considerable energy saving.

In a further advantageous way, a stepping motor driven valve is not subject to hysteresis occurrences due to internal frictions in the valve stem motion, because said stem will be moved in air and not in water, thus being less influenced by internal frictions, as it is known that hysteresis between opening and closing of a stepping motor driven valve is equal to zero. In view of this characteristic, the stepping motor driven valve allows much more precise pressure variation even in the closure step, and the result will be a coffee beverage with less acidity and superior quality.

It is also to be noted that a stepping motor driven valve does not need a calibration for each manufactured item, because the valve closure force is not supplied by a spring but by the motor closing torque. This produces a greater repeatability and precision of calibration from valve to valve, thus from one machine to the other.

It has to be pointed out that use of stepping motor driven valves is known in other technological fields; for instance document GB 2348185 discloses a valve of this kind for adjusting the flow rate of carbonated drinks, where the valves must be designed, manufactured and calibrated for quite different pressures, temperatures and regulations in respect of those required in the field of the present invention; in any case the valve disclosed in said document is adapted to control the flow rate but cannot be used to adjust the pressure in a coffee percolator and does not allow to remove the problem of circuit feedback. The system disclosed in said document is feedback operated and was designed to regulate the beverage quantity without considering the pressure, consequently objects and technical solutions are different from those described in the present invention.

From the foregoing, these and other advantages will be achieved according to the present invention, by a coffee percolator for preparing coffee beverages, comprising at least a hydraulic pump to adjust water inflow, a hydraulic circuit by which the pump is connected to a delivery assembly provided with a filter unit for the coffee powder, a volumetric meter being arranged between said pump and said delivery assembly, to adjust the water flow rate required to obtain a determined beverage quantity, a water flow rate adjusting valve and a boiler to set the water temperature at the desired value, and an outlet valve, wherein the water flow rate adjusting valve is a proportional valve comprising a linear stepping motor, a sleeve provided with a flange, a stem provided with a shutter and at least one dynamic sealing O-ring.

These and other advantages of a coffee percolator provided with the valve according to the present invention will be apparent from the following detailed description of a preferred embodiment, with reference to the accompanying sheets of drawings, in which:
Fig. 1 shows an example of a typical circuit of a coffee percolator;
Fig. 2 is a sectional view of a motor driven valve of the present invention, in the open and closed condition, respectively;
Fig. 3 is a sectional view of a motor driven valve of the present invention, compared with a solenoid valve, both valves being in the open condition; and

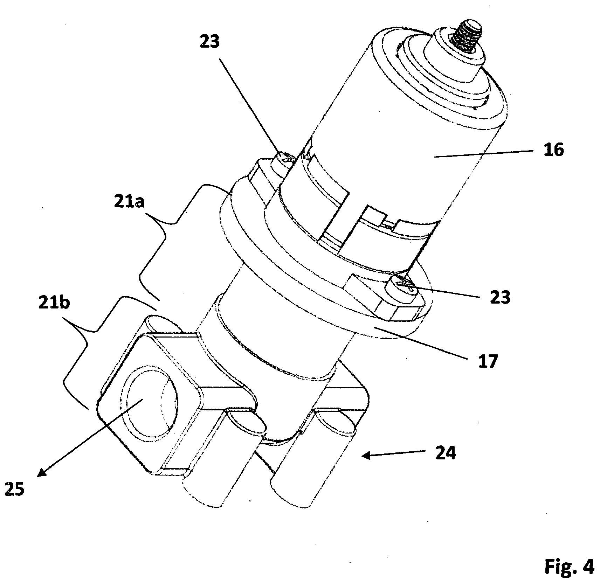

Fig. 4 shows a stepping motor driven valve of the present invention as it is in reality (in a three-dimensional view).

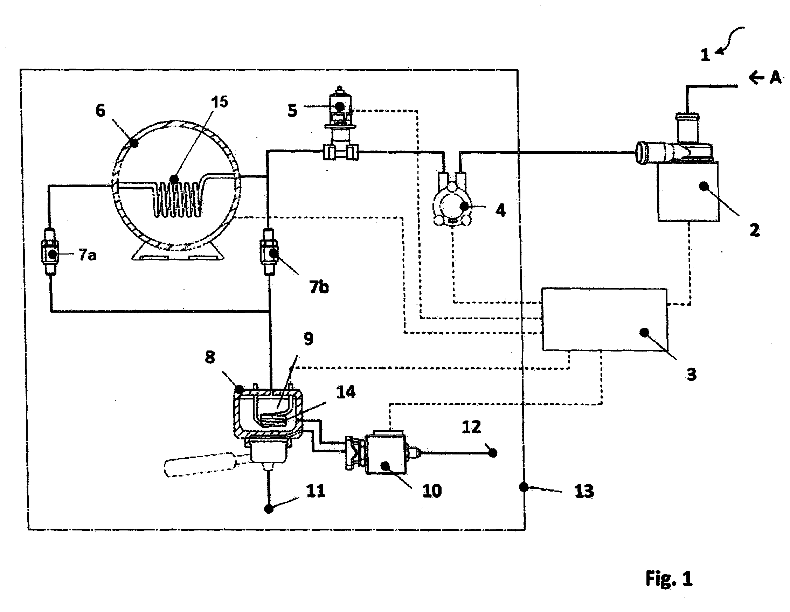

Fig. 1 shows the basic components of a typical circuit for a coffee percolator, assembled according to a preferred embodiment of the present invention. Point A indicates the connection to the water supply; a hydraulic pump 2 raises pressure of the connected water supply to a valve of about 9 bar. Pump 2 operates at a constant pressure, thus keeping pressure at the desired preset value, irrespective of the flow rate. Through hydraulic circuit 13, hydraulic pump 2 is connected to a delivery assembly 8, comprising a filter 9, in which coffee powder is loaded, which flows through a proper delivery device 11. A three-way outlet valve 10 and a drain 12 are also connected to the delivery assembly 8.

In the hydraulic circuit 13, between hydraulic pump 2 and delivery assembly 8, the components producing the correct conditions for coffee delivery are series connected, namely a volumetric meter 4, adapted to transduce the exact water quantity to obtain the desired quantity of coffee at the delivery device 11 of the delivery assembly 8. In this preferred embodiment, a stepping motor driven valve 5 and thereafter a boiler 6 or heat exchanger are disposed downstream the volumetric meter 4. Boiler 6 is useful for raising the temperature to the required level for delivering the coffee beverage. The motor driven proportional valve 5, connected between volumetric meter 4 and boiler 6, adjusts the flow rate according to the signals coming from the electronic control unit (ECU) 3. ECU 3 is connected to all the components of the machine circuit, monitoring and regulating continuously the fundamental values of temperature, pressure and flow rate.

Hot water heated by resistance 15 and outgoing from boiler 6 may be mixed with cold water coming from an offtake (not shown) upstream the boiler 6, through two proper nozzles 7a and 7b, calibrated for the hot branch and the cold branch, respectively. In this way it is possible to achieve constant values of water temperature. The mixed water is then heated again in the delivery assembly 8, provided with a heating resistance 14 for this purpose. Coffee beverage is delivered through the outlet 11. The three-way valve 10 connects the portion of the delivery assembly 8 including the heating resistance 14 with the portion including filter 9 during the beverage delivery stage. Once this beverage delivery stage is ended, said three-way valve 10 releases pressure accumulated in the hydraulic circuit 13 and the delivery assembly 8, connecting said delivery assembly 8 to drain 12.

More particularly ECU 3 has the following functions: regulation of temperature of resistances 14 and 15, actuation of three-way valve 10, switching the hydraulic pump 2 on and off, reading the quantity of water transduced by volumetric meter 4 into a volumetric signal proportional to the measured quantity of water. Quantity of delivered coffee and the consequently regulated parameters depend on the settings input into ECU in the initial stage.

As mentioned in detail hereinbefore, the basic parameters to obtain a coffee beverage of good quality, namely correct temperature, water pressure and delivery time, adjusted by the system, must be met by a correct regulation and operation of the system components, and the particular type of adjustable proportional valve used in the circuit is particularly important to achieve the desired result, precisely respecting the reference parameters input into ECU 3.

It has to be pointed out that the stepping motor driven valve 5 of the present invention, as described more in detail hereinafter, does not require a feedback circuit, as it operates in an open loop circuit, thus undergoing less delays, and as clearly seen in Figure 1, does not require an additional pressure transducer, with a consequent circuit simplification and considerable monetary saving, besides improving quality of delivered coffee, in view of better keeping the input delivery times and pressures.

The typical infusion process developed in a coffee percolator 1, generally comprises the following main steps: hydraulic pump 2 is started at constant pressure, usually 9 bars; water is then heated at a temperature higher than the room temperature; water arrives at the proportional stepping motor driven valve 5, which is opened with adjustment to a predetermined flow rate, causing water to flow at low pressure; said water wets the ground coffee contained in filter 9 of the delivery assembly 8; before reaching filter 9, when passing through the delivery assembly 8 provided with the heating resistance 14, water is heated to a temperature considered to be optimal, generally maintained under 100°C.

In a stepping motor driven valve 5 according to the present invention, the steps are linearly incremented, thus obtaining a gradual pressure rise. As mentioned above, it was verified that a gradual pressure rise (i.e. not sudden) increases quality of the coffee beverage delivered by machine 1. It was tested that a stepping motor driven valve 5 is able to raise pressure in a much more gradual way relative to other types of valves used for the same purpose.

Then the real extraction procedure starts when the maximum open condition of valve 5 is reached and consequently the maximum pressure (e.g the indicated value of 9 bars) delivered by the hydraulic pump 2, will be applied to coffee filter 9. Once the predetermined coffee quantity is delivered, the stepping motor driven valve 5 may be closed, before or after switchover of the three-way valve 10, which has the function of releasing pressure from the delivery assembly 8. The hydraulic pump 2 is then switched off, unless one must keep under pressure other installed delivery assemblies (a not shown case of machines with multiple delivery assemblies). Closure of the stepping motor driven valve 5 may be carried out linearly, like in the opening stage. Just for information, when a machine is provided with a plurality of delivery assemblies, it would be possible to deliver several beverages at the same time, always using one single hydraulic pump 2 and actuating two or more delivery assemblies 8.

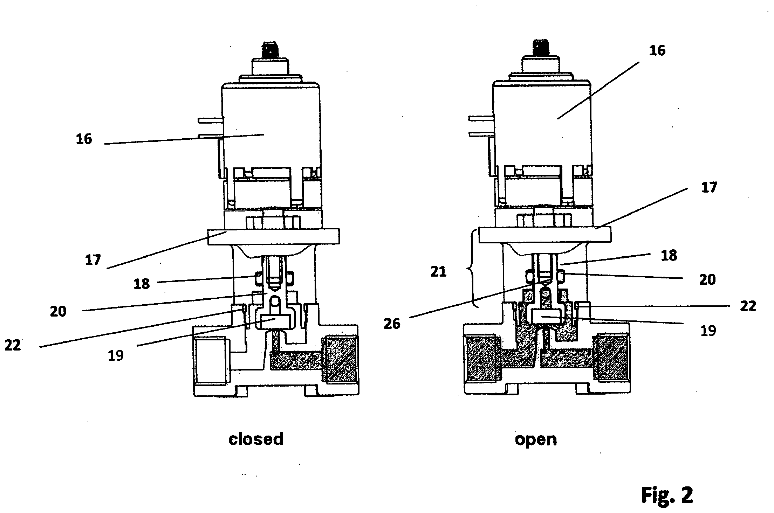

With reference now to Figure 2, in a particularly advantageous way, the present invention provides for a stepping motor driven valve 5 made of materials particularly suitable for this use, as hereinafter illustrated.

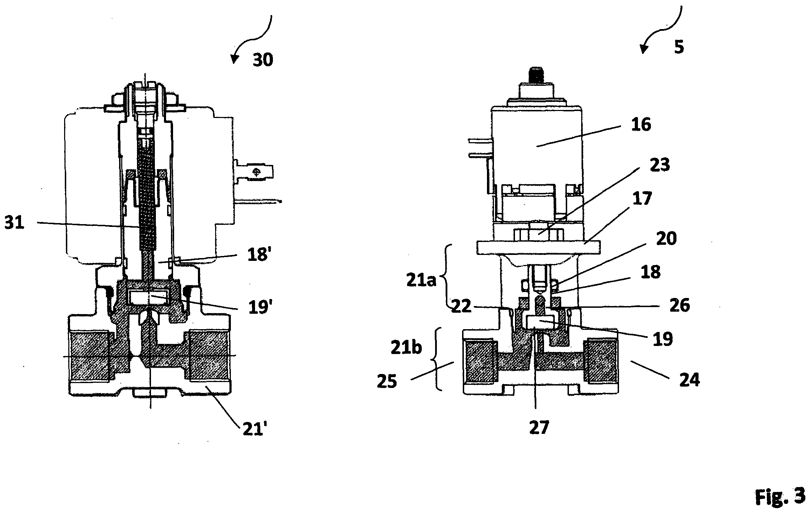

Figure 2 shows a stepping motor driven valve 5, whose main components are the stepping motor 16, fixed on sleeve 21 with flange 17 by means of screws 23. Sleeve 21 comprises a stem 18 holding a shutter 19, at least one dynamic O-ring 20 and at least one static O-ring 22. Valve body comprises at least one inlet 24 and one outlet 25. Obviously inlet 24 and outlet 25 may be inverted according to the chosen embodiment. Figure 2 shows the stepping motor driven valve 5 in the closed and open condition, so as to highlight that the water flow inside the valve, never touches the inner chamber 26 of stem 18. This detail is very advantageous, because in this way valve 5 does not feel occurrences of hysteresis due to internal friction during motion of shutter 19, since said shutter 19 moves in air and not in water (see figure 3, solenoid valve 30 open, stem 18' filled with liquid in the open stage) with less influence of inner friction. Indeed it is known that hysteresis between opening and closing of a stepping motor driven valve 5 is equal to zero. In view of this characteristic the stepping motor driven valve 5 allows a much more precise pressure variation even in the closure stage and the advantageous final result will be a coffee beverage with less acidity and superior quality.

Referring now to Figure 3, showing a comparison between the solenoid valve 30 and the stepping motor driven valve 5, it is clear the influence that spring 31 exerts in the operation of a solenoid valve 30 of the proportional kind: indeed in view of spring 31 and passage of liquid inside the valve body, and more particularly inside stem 18' in which shutter 19' is moving, it is subject to several inner frictions and strong hysteresis (due to presence of fluid and not liquid in the opening/closing stage), where typical hysteresis values for a solenoid valve 30 between the opening and closing stage are in the range of 20%. Conversely a stepping motor driven valve 5 does not undergo occurrences of hysteresis.

In a further advantageous way, since the movable portion of valve 5 has less contact with liquid relative to a solenoid valve 30, a motor driven valve 5 is less prone to wear and corrosion of the operative core formed by stem 18 and shutter 19.

Moreover, shutter 19 of the stepping motor driven valve 5 may for instance be made of an elastomer to confer a perfect seal in the closure stage, or in case of different technical requirements, it may be made of steel which has not a perfect seal in the closure stage, but allows a greater precision in the closure position, as it does not feel the elastic deformation of the elastomeric material. Moreover steel gives a greater chemical compatibility with the cleaning additives for coffee percolators, because an elastomeric shutter may alter its dimensions in contact with a product not compatible with this kind of shutter, thus being more prone to failure or having closure defects. Finally a shutter made of steel with a sufficiently high motion torque, allows to crush possible limestone deposits on the orifice 27. Therefore it will be possible to decide the kind of shutter to be inserted in the valve according to the requirements of use.

The foregoing are only some of the preferred embodiments of the coffee percolator, and more particularly of a circuit for said percolator, comprising a stepping motor driven valve according to the present invention. Said valve may be arranged in different positions inside the circuit, and may have alternative embodiments to the previously described preferred ones, wherein modifications and substitutions concerning for instance the geometry chosen for the individual mobile and fixed elements, the materials adopted for each element and even the electrical specifications of the operative system, may be made without departing however from the scope of protection of the present invention, as defined in the appended claims.

## Claims

1. A coffee percolator for preparing coffee or coffee-based beverages, comprising at least a hydraulic pump (2) regulating water inflow to the percolator, a hydraulic circuit (13) through which said pump (2) is connected to a delivery assembly (8) provided with a filter unit (9) containing coffee powder; a volumetric meter (4) being arranged between said pump (2) and said delivery assembly (8), to regulate the water quantity required to obtain a desired beverage amount, a valve (5) for controlling the water flow rate and a boiler (6) to adjust water temperature to a desired value, an outlet valve (10), and an electronic control unit (3), **characterised in that** said valve (5) for controlling the water flow rate is a motor driven proportional valve comprising a linear stepping motor (16), a sleeve (21) provided with a flange (17), a stem (18) provided with a shutter (19) and at least one dynamic sealing O-ring (20), wherein said stepping motor driven control valve (5) controls also the water pressure in the infusion and extraction stages with an open loop by changing the steps of the linear stepping motor (16)..

2. The coffee percolator of claim 1, wherein said stepping motor driven valve (5) is actuated by the electronic control unit (3) which also controls said hydraulic pump (2) regulating water inflow to the percolator, the hydraulic circuit (13) with an open loop regulation, the delivery assembly (8), the volumetric meter (4), the boiler (6) and the outlet valve (10).

3. The coffee percolator of claims 1 and/or 2, wherein said control valve (5) opens in the infusion stage, being actuated by the electronic control unit (3), increasing the steps linearly to obtain a gradual pressure rise, and closes in the extraction stage by reducing the steps also in a linear mode.

4. The coffee percolator of claims 1-3, wherein said stepping motor driven control valve (5) is positioned downstream the boiler (6).

5. The coffee percolator of claim 1-3, wherein said stepping motor driven control valve (5) is positioned upstream the boiler (6).

6. The coffee percolator of claim 1, wherein said shutter (19) is made of an elastomeric material, steel or other similar material.

7. The coffee percolator of claim 1, wherein one or more delivery assemblies (8) are provided, all fed by one hydraulic pump (2).

## Patentansprüche

1. Kaffeemaschine für die Aufbereitung von Kaffee bzw. Getränken auf der Grundlage von Kaffee, enthaltend mindestens eine Hydropumpe (2) zur Regelung des Wasserzulaufs an die Maschine und einen Kreislauf (13), der die Hydropumpe (2) mit einer eine Filtereinheit (9) für das Kaffeepulver enthaltende Versorgungsgruppe (8) verbindet; zwischen der Hydropumpe (2) und der Versorgungsgruppe (8) sind ein Volumenzähler (4) zur Regelung der für eine bestimmte Menge von Getränken erforderlichen Wassermenge, einen Wasserströmungsregler (5) und einen Kessel (6) zur Regelung der Wassertemperatur an den gewünschten Wert vorhanden; sowie ein Auslassventil (10) und ein elektronisches Steuergerät (3), **dadurch gekennzeichnet, dass** der Wasserströmungsregler (5) ein motorisiertes Proportionalventil ist, das einen Linearschrittantrieb (16), ein mit einem Flansch (17) versehenes Rohr (21), einen mit einer Klappe (19) versehenen Schaft (18) und mindestens einen Runddichtring (20) aufweist, wobei der motorisierte Strömungsregler (5) auch den Wasserdruck in der offenen Schleife während der Infus-bzw. Förderphasen verstellt, indem er die Schritte des Linearschrittantriebs (16) verändert.

2. Kaffeemaschine nach Anspruch 1, worin der motorisierte Schrittströmungsregler (5) vom elektronischen Steuergerät (3) angetrieben wird, wobei das Steuergerät (3) auch die Hydropumpe (2) zur Regelung des Wasserzulaufs an die Maschine, den Kreislauf (13) mit Regelung in der offenen Schleife, die Versorgungsgruppe (8), den Volumenzähler (4), den Kessel (6) und das Auslassventil (10) schaltet.

3. Kaffeemaschine nach Ansprüchen 1 und/oder 2, worin sich der vom elektronischen Steuergerät (3) angetriebene Strömungsregler (5) während der Infus-Phase öffnet und eine stufenweise Druckerhöhung erzeugt, und während der Förderphase schließt und eine stufenweise Druckverringerung noch linear schafft.

4. Kaffeemaschine nach Ansprüchen 1-3, worin der motorisierte Schrittströmungsregler (5) stromabwärts gegenüber dem Kessel (6) angeordnet ist.

5. Kaffeemaschine nach Ansprüchen 1-3, worin der motorisierte Schrittströmungsregler (5) stromaufwärts gegenüber dem Kessel (6) angeordnet ist.

6. Kaffeemaschine nach Anspruch 1, worin die Klappe (19) aus Elastomer, Stahl oder anderen vergleichbaren starren Werkstoffen hergestellt wird.

7. Kaffeemaschine nach Anspruch 1, worin eine bzw. mehrere Versorgungsgruppen (8) vorliegen, wobei alle die Gruppen von einer Hydropumpe (2) versorgt werden.

## Revendications

1. Percolateur à café pour la préparation du café ou des boissons à base de café, comprenant au moins une pompe hydraulique (2) de réglage de l'afflux d'eau au percolateur, un circuit hydraulique (13) pour connecter la pompe (2) à un groupe de distribution (8) muni d'une unité à filtre (9) pour la poudre de café; entre la pompe (2) et le groupe de distribution (8) il y a en outre un compteur volumétrique (4) de réglage de la quantité d'eau nécessaire pour obtenir la quantité voulue de boisson, une soupape (5) de réglage du débit d'eau et une chaudière (6) pour régler la température de l'eau à la valeur voulue; ainsi que une valve distributrice (10) et une unité de contrôle électronique (3), **caractérisé en ce que** la soupape (5) de réglage du débit d'eau est une vanne proportionnelle motorisée comprenant un moteur pas à pas linéaire (16), un fourreau (21) muni d'une bride (17), une tige (18) avec un tournant (19) et au moins un joint torique (20) à étanchéité dynamique, où la vanne motorisée pas à pas (5) règle aussi la pression de l'eau en anneau ouvert dans les phases d'infusion et d'extraction en variant les pas du moteur pas à pas linéaire (16).

2. Percolateur à café selon la revendication 1, dont la vanne de réglage motorisée pas à pas (5) est commandée par l'unité de contrôle électronique (3) que commande aussi la pompe hydraulique (2) de réglage de l'afflux d'eau au percolateur, le circuit hydraulique (13) avec réglage en anneau ouvert, le groupe de distribution (8), le compteur volumétrique (4), la chaudière (6) et la valve distributrice (10).

3. Percolateur à café selon la revendication 1 et/ou 2, dont la vanne de réglage (5) commandée par l'unité de contrôle électronique (3), dans la phase d'infusion s'ouvre en accroissant les pas en manière linéaire et obtenant une élévation graduelle de la pression, et dans la phase d'extraction se ferme en réduisant les pas toujours en manière linéaire.

4. Percolateur à café selon les revendications 1-3, dont la vanne de réglage motorisée pas à pas (5) est disposée en aval de la chaudière (6).

5. Percolateur à café selon les revendications 1-3, dont la vanne de réglage motorisée pas à pas (5) est disposée en amont de la chaudière (6).

6. Percolateur à café selon la revendication 1, dont le tournant (19) est fait en élastomère, acier ou autre matériau rigide assimilable.

7. Percolateur à café selon la revendication 1, dont il y a un ou plusieurs groupes de distribution, tous alimentés par une pompe hydraulique (2).
